(19) Europäisches Patentamt
European Patent Office
Office européen des brevets

(11) **EP 3 081 850 A1**

(12) **DEMANDE DE BREVET EUROPEEN**

(43) Date de publication:
**19.10.2016 Bulletin 2016/42**

(51) Int Cl.:
***F21S 8/10*** (2006.01)     ***F21V 29/90*** (2015.01)

(21) Numéro de dépôt: **16165501.4**

(22) Date de dépôt: **15.04.2016**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD**

(30) Priorité: **16.04.2015  FR 1553375**

(71) Demandeur: **VALEO VISION**
**93012 Bobigny Cedex (FR)**

(72) Inventeurs:
• **HERMITTE, Michel**
**49100 ANGERS (FR)**
• **FAOUCHER, Erwan**
**49240 AVRILLÉ (FR)**
• **BONNEAU, Fabien**
**49000 ANGERS (FR)**

(54) **DISPOSITIF DE COMMANDE D'UN SYSTÈME D'ÉCLAIRAGE ET/OU DE SIGNALISATION DE VÉHICULE**

(57)    Ce dispositif de commande d'un système (2) d'éclairage et/ou de signalisation de véhicule (15), comprend des moyens (3, 5, 6) aptes à déterminer une valeur de température de point de rosée intérieure au système à partir d'au moins une valeur de température intérieure au système (2) et d'au moins une valeur d'humidité intérieure au système (2).

**Fig. 1**

EP 3 081 850 A1

**Fig. 2**

**Description**

L'invention concerne les systèmes d'éclairage et/ou de signalisation de véhicule.

Les feux ou les projecteurs de véhicule présentent une glace qui sépare le système de l'extérieur du véhicule. Ces systèmes présentent un espace interne, qui, comme tout espace non vide, comprend une masse d'air, notamment de la vapeur d'eau. Or, lorsque la vapeur d'eau refroidit, elle peut se condenser et se transformer en eau liquide ou en glace. Cela arrive notamment lorsque la masse d'air située à l'intérieur du projecteur ou du feu est refroidie par la température extérieure au véhicule, notamment au niveau de la glace. Cette condensation engendre de la buée sur l'intérieur de la glace du feu ou du projecteur. En cas de température encore plus froide, la vapeur d'eau peut se solidifier et se transformer en givre. De la buée peut également se former sur l'extérieur de la glace. La buée peut également se transformer en givre, par exemple la nuit. Or, l'apparition de buée ou de givre sur les glaces des feux ou des projecteurs est dangereuse puisque leur luminosité est diminuée, le véhicule devenant par conséquent moins visible de l'extérieur ou bien l'éclairage fourni devenant insuffisant.

On connait du document DE-102012010871 un projecteur comprenant un capteur de température interne, un capteur visuel, et des moyens de chauffage. Les moyens de chauffage sont activés automatiquement lorsque le capteur visuel détecte du givre ou lorsqu'un seuil de température prédéterminé a été franchi, de façon à dégivrer la glace du projecteur.

Cependant, ce dispositif gère uniquement le dégivrage, c'est-à-dire la lutte contre la condensation solide, et non contre la condensation liquide. De plus, il est curatif. En effet, le capteur visuel détecte le givre une fois qu'il est présent, ce qui ne permet pas de prévenir son apparition. Bien que le capteur visuel ne soit pas apte à détecter la condensation liquide, on pourrait penser que le capteur de température de ce dispositif permettrait de l'empêcher. Mais l'utilisation d'un seuil de température est inefficace pour détecter la buée, car la condensation liquide peut apparaître à différentes températures, en fonction des conditions environnementales. Ainsi, en utilisant un seuil de température prédéterminé, le dispositif réagirait de façon inefficace, en activant le chauffage trop tôt ou trop tard par rapport à l'apparition de buée selon les situations.

Un but de l'invention est d'améliorer la protection du système contre la buée ou le givre susceptible d'apparaître sur la paroi intérieure ou extérieure de la glace du projecteur.

A cet effet, on prévoit selon l'invention un dispositif de commande d'un système d'éclairage et/ou de signalisation de véhicule, qui comprend des moyens aptes à déterminer une valeur de température de point de rosée intérieure au système à partir d'au moins une valeur de température intérieure au système et d'au moins une valeur d'humidité intérieure au système.

Ainsi, les moyens sont aptes à déterminer une valeur de température à l'intérieur du système, un taux d'humidité à l'intérieur du système, et à en déduire la valeur de la température de point de rosée, c'est-à-dire la température à laquelle la vapeur d'eau de la masse d'air intérieure au système va se liquéfier lorsqu'elle est refroidie au niveau de la glace, formant ainsi de la buée sur l'intérieur de la glace. Cette information permet d'améliorer le pilotage du système pour prévenir ou lutter contre la buée et le givre.

Avantageusement, les moyens comprennent un capteur de température intérieur au système.

Ainsi, la température intérieure n'est pas déterminée indirectement mais mesurée directement.

De préférence, les moyens comprennent un capteur apte à mesurer une valeur d'humidité intérieure au système.

Ainsi, l'humidité intérieure n'est pas déterminée indirectement mais mesurée directement.

De préférence, les moyens comprennent un capteur de température extérieur au système.

Ce capteur peut être indépendant ou non d'un autre capteur du véhicule.

De préférence, le dispositif comprend au moins un moyen de chauffage. Le au moins un moyen de chauffage est apte à chauffer l'air à l'intérieur du dispositif et/ou à chauffer directement au moins une paroi du dispositif.

Avantageusement, les moyens comprennent des moyens de commande aptes à commander au moins un moyen de chauffage du système en fonction de la valeur de la température de point de rosée et d'au moins une autre valeur de température.

De préférence, l'autre valeur est une valeur de température extérieure au véhicule.

En effet, la valeur de la température extérieure a un effet direct sur la valeur de température de la glace du système, puisque cette dernière est en contact direct avec l'extérieur du véhicule. Ainsi, sans chauffage de la glace, sa température peut être égale à la température extérieure au véhicule. Or, si la température de la glace au niveau de sa paroi côté système est inférieure à la température de point de rosée de la masse d'air intérieur du système, des gouttelettes risquent de se former par condensation sur l'intérieur de la glace. On surveille ainsi la valeur de la température extérieure, au moyen par exemple d'un capteur existant sur beaucoup de véhicules, par rapport à la valeur de la température de point de rosée de la masse d'air intérieure du système, de façon à moduler par chauffage la valeur de la température intérieure du système pour éviter la formation de buée sur l'intérieur de la glace.

Avantageusement, les moyens sont aptes à maintenir actif au moins un moyen de chauffage du système pendant une durée prédéterminée une fois que la valeur de la température extérieure est devenue supérieure à la valeur de la température de point de rosée.

Ainsi, on réalise des économies d'énergie car on évite d'activer et de désactiver le au moins un moyen de chauffage à chaque fois que les courbes des températures se croisent.

De préférence, les moyens sont aptes à déterminer, à un instant donné, une valeur de la dérivée d'une fonction représentant une évolution future de la valeur de température de point de rosée audit instant donné.

On entend, par exemple, par valeur de la dérivée d'une fonction à un instant donné, le coefficient directeur de la tangente d'une courbe représentant la dite fonction audit instant donné. Le coefficient directeur est aussi appelé pente.

En particulier les moyens sont aussi aptes à calculer l'équation de la tangente de ladite courbe représentant l'évolution future de la valeur de température de point de rosée audit instant donné.

Ainsi, les moyens gardent en mémoire les valeurs de température de point de rosée au fur et à mesure qu'elles sont déterminées. Cela permet d'établir une série de valeurs, et donc d'estimer une tendance à un instant donné concernant l'évolution des valeurs de température de point de rosée. Les moyens peuvent alors anticiper l'évolution future de la température de point de rosée et commander ou non le au moins un moyen de chauffage de la masse d'air intérieur du système et/ou de la glace du projecteur en fonction de ces prévision.

Avantageusement, les moyens sont aptes à déterminer, à un instant donné, une valeur de la dérivée d'une fonction représentant une évolution future de la valeur de température extérieure audit instant donné.

On entend, par exemple, par valeur de la dérivée d'une fonction à un instant donné, le coefficient directeur de la tangente d'une courbe représentant la dite fonction audit instant donné. Le coefficient directeur est aussi appelé pente.

Ainsi, les moyens gardent en mémoire les valeurs des mesures de la température extérieure au fur et à mesure qu'elles sont mesurées. Cela permet d'établir une série de valeurs, et donc d'estimer une tendance à un instant donné concernant l'évolution des valeurs de température extérieure.

Avantageusement, les moyens sont aptes à déterminer une valeur représentant un instant auquel la valeur de température de point de rosée sera égale à la valeur de la température extérieure et à commander le au moins un moyen de chauffage avec une avance d'une durée prédéterminée par rapport à cet instant.

Plus particulièrement, les moyens sont aptes à déterminer l'instant auquel ladite tangente à la courbe de température de rosée et ladite tangente à la courbe de la température extérieure se croisent. En d'autres termes, les moyens sont aptes à déterminer le point d'intersection desdites tangentes.

Ainsi, les moyens peuvent déterminer si, dans un futur proche, la valeur de la température de point de rosée risque de passer au-dessus de la valeur de la température extérieure. Dans ce cas, la valeur de la température de la glace risquerait d'être inférieure au point de rosée. Le au moins un moyen de chauffage peuvent alors être activés afin d'empêcher cette situation. Cela permet de réaliser des économies. En effet, il est préférable d'activer le au moins un moyen de chauffage de manière préventive, au moyen d'une puissance de chauffage par exemple faible, plutôt que de devoir lutter contre la condensation déjà présente au moyen d'une puissance de chauffage élevée.

De préférence, la valeur de température de point de rosée représente la température de point de rosée courante.

Avantageusement, les moyens sont aptes à commander le au moins un moyen de chauffage lorsque la valeur de température de point de rosée est supérieure à la valeur de température extérieure.

Ainsi, on active le au moins un moyen de chauffage si l'on se trouve déjà dans une situation de condensation potentielle, lorsque la valeur de la température de point de rosée est supérieure à la valeur de la température extérieure.

De préférence, les moyens sont en outre aptes à commander le au moins un moyen de chauffage de manière à empêcher un givrage au sein du système.

Avantageusement, les moyens sont aptes à déterminer une valeur de puissance du au moins un moyen de chauffage parmi au moins deux valeurs non nulles en fonction d'une valeur de température extérieure au véhicule.

Par exemple, la valeur de la puissance de chauffage est corrélée à l'opposé de la valeur de la température extérieure. Ainsi, dans une gamme de températures prédéterminée, plus la température est faible, plus la puissance du chauffage est importante.

On prévoit également selon l'invention un système d'éclairage et/ou de signalisation qui comprend au moins un dispositif selon l'invention.

On prévoit enfin selon l'invention un procédé de commande d'un système d'éclairage et/ou de signalisation de véhicule, dans lequel on détermine une valeur de température de point de rosée à l'intérieur du système à partir d'au moins une valeur de température intérieure au système et d'au moins une valeur d'humidité intérieure au système.

Avantageusement, on commande au moins un moyen de chauffage du système en fonction de la valeur de température de point de rosée et d'une autre valeur de température, notamment une valeur de température extérieure au véhicule.

De préférence, on maintient actif le au moins un moyen chauffage du système pendant une durée prédéterminée une fois que la valeur de la température extérieure est devenue supérieure à la valeur de température de point de rosée.

Avantageusement, on détermine à un instant donné, une valeur de la dérivée d'une fonction représentant l'évolution de la valeur de température de point de rosée audit instant donné.

De préférence, on détermine une valeur représentant un instant auquel la valeur de température de point de rosée sera égale à la valeur de température extérieure et on commande le au moins un moyen de chauffage avec une avance d'une durée prédéterminée par rapport à cet instant.

Avantageusement, la valeur de température de point de rosée représente la température de point de rosée courante.

De préférence, on commande le au moins un moyen de chauffage lorsque la valeur de température de point de rosée est supérieure à la valeur de température extérieure.

Avantageusement, on commande au moins un moyen de chauffage du système de manière à empêcher un givrage au sein du système.

De préférence, on commande une valeur de puissance du au moins un moyen de chauffage parmi au moins deux valeurs non nulles en fonction d'une valeur de température extérieure au véhicule.

Nous allons maintenant présenter un mode de mise en oeuvre de l'invention à l'appui des figures annexées, qui sont fournies à titre d'exemples et ne présentent aucun caractère limitatif, dans lesquelles :

- la figure 1 illustre un véhicule comprenant un dispositif selon l'invention ;
- la figure 2 illustre de façon schématique un dispositif selon l'invention ;
- la figure 3 illustre un procédé selon l'invention ; et
- la figure 4 est un graphique illustrant des évolutions de températures lors d'un mode de mise en oeuvre d'un procédé selon l'invention.

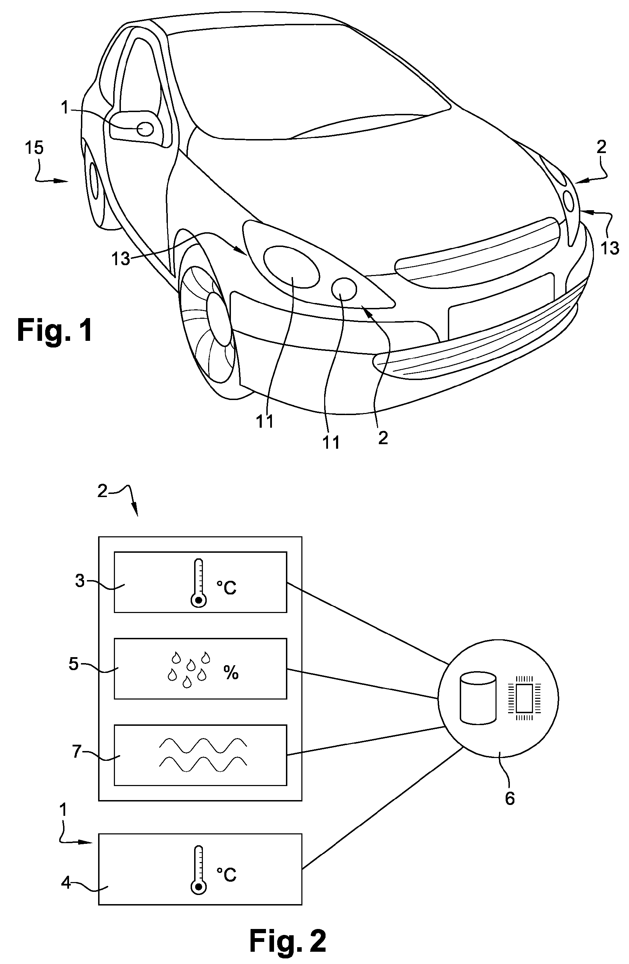

La figure 1 illustre un véhicule 15. Ce véhicule comprend deux systèmes 2 d'éclairage et de signalisation. Il comprend également un dispositif selon l'invention. Chaque système 2 comprend des sources lumineuses 11, situées derrière une glace 13.

Comme illustré schématiquement sur la figure 2, le dispositif selon l'invention comprend trois parties. Tout d'abord une partie située au sein du système 2, qui comprend un capteur de température 3, qui mesure en temps réel la température de la masse d'air intérieur du système située entre les sources lumineuses 11 et la glace 13 du système, un capteur d'humidité 5, qui mesure l'humidité relative au sein de ce même espace, et du moyen de chauffage 7, qui sont aptes à chauffer cette masse d'air, et dont le but plus précis est de chauffer la paroi intérieure de la glace 13. Le moyen de chauffage 7 peuvent fonctionner de différentes manières : Ils peuvent chauffer la masse d'air et/ou la paroi intérieure de la glace 13 par soufflage d'air chaud, et/ou encore en émettant de la chaleur par effet Joule, par exemple au moyen d'un barreau métallique situé au pied de la glace 13 du système 2. Tout autre moyen de chauffage de la masse d'air intérieure, a fortiori de la paroi intérieure de la glace 13 du système 2, est envisageable.

La deuxième partie du dispositif comprend un capteur 1 de la température extérieure. Celui-ci est situé en l'espèce sur le rétroviseur du véhicule 15, comme cela est illustré à la figure 1, mais il pourrait être n'importe où à condition que la température qu'il mesure corresponde bien à la température extérieure au véhicule, par exemple sans que des sources de chaleur propres au véhicule n'interviennent. Ce capteur peut appartenir ou non au réseau CAN (« *Controller Area Network* », en français « *réseau de contrôle de zone* ») du véhicule 15.

Enfin, la troisième partie du dispositif comprend des moyens de calcul et de commande automatisés 6, tels qu'un processeur associé à une base de données. Ces moyens 6 sont reliés aux capteurs 3, 4, 5 et au moyen de chauffage 7 précité. Ainsi, ils ont connaissance en temps réel des valeurs de la température extérieure, de la température intérieure du système et du taux d'humidité relatif interne du système. Ces deux dernières valeurs permettent aux moyens 6 de déterminer la valeur de la température de point de rosée de la masse d'air intérieur du système 2. Cette température, également appelée « point de rosée », est une donnée thermodynamique caractérisant l'humidité dans un gaz. Le point de rosée d'une masse d'air donnée est la température à laquelle la pression partielle de la vapeur d'eau de cette masse d'air est égale à sa pression de vapeur saturante. Il s'agit donc de la température à laquelle il faut refroidir la masse d'air, à pression et humidité constantes, pour qu'elle devienne saturée. En d'autres termes, c'est la température à laquelle il faut refroidir une masse d'air, à pression constante, afin que la vapeur d'eau de la masse d'air se condense, se transformant en liquide. Ainsi, les moyens de commande 6 peuvent déterminer à quelle température interne au système 2 des gouttelettes vont se former, notamment sur la glace du système, si cette dernière est refroidie. Les moyens 6 déterminent donc de ce fait quelle valeur de température il faut éviter d'atteindre au sein du système 2 afin de ne pas former de la buée sur la paroi intérieure de la glace 13, qui est nécessairement la partie la plus froide du système et donc la première concernée. La formule définissant la température de point de rosée est la suivante :

$$Td\,(t, RH) = Tn * (\ln\left(\frac{RH}{100\,\%}\right) + m * \frac{t}{Tn+t}) \, / \, (m - [\ln\left(\frac{RH}{100\,\%}\right) + m * \frac{t}{Tn+t}]) \,,$$

où :

- Td est la température de point de rosée en degrés Celsius,
- t est la température de la masse d'air intérieur du système en degrés Celsius,
- RH est le taux d'humidité relatif de cette masse d'air en pourcentage,
- m est une constante sans unité valant 17,62, et
- Tn une autre constante valant 243,12 degrés Celsius.

Les moyens 6 utilisent donc cette formule pour déterminer en temps réel la valeur de la température de point de rosée de la masse d'air intérieur au système 2.

De plus, les moyens 6 peuvent anticiper l'évolution future du « point de rosée ». En effet, ils calculent les températures de point de rosée au fur et à mesure qu'ils obtiennent les valeurs de température interne au système et les valeurs des taux d'humidité relative. Ils déterminent donc une série de valeurs de point de rosée au cours du temps. A partir de cette série de valeurs, il est possible d'estimer une tendance concernant l'évolution future du point de rosée, et d'estimer les valeurs que le point de rosée va prendre dans les minutes qui suivent. Par exemple, sur une courbe illustrant l'évolution de la température de point de rosée, il suffit de prolonger la direction prise par la courbe pour les dernières valeurs calculées, pour avoir une idée des évolutions futures de la température de point de rosée.

Enfin, les moyens 6 sont aptes à commander le moyen de chauffage 7. Ils peuvent donc les activer, les désactiver et moduler leur puissance parmi au moins deux valeurs de puissances différentes de zéro.

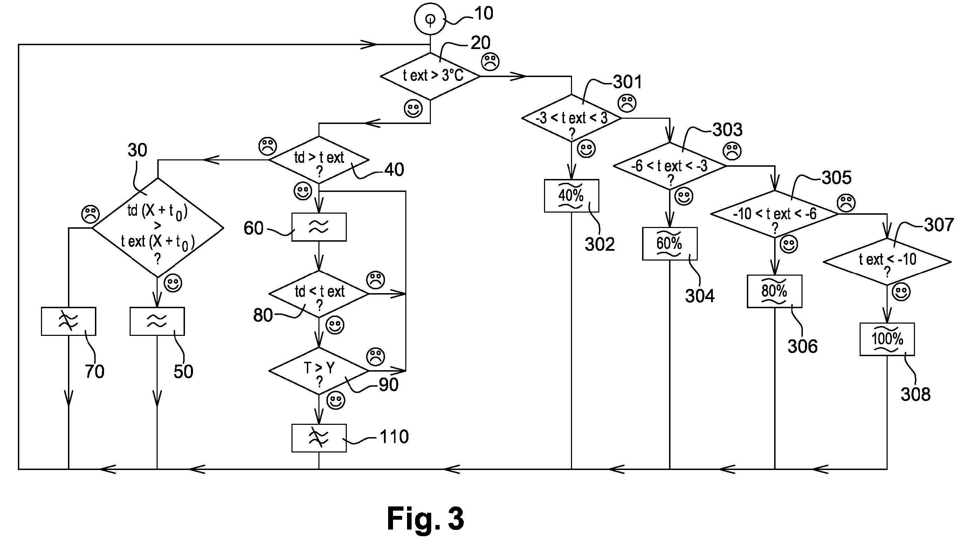

En référence à la figure 3, nous allons maintenant décrire un procédé selon un mode de mise en oeuvre de l'invention et mis en oeuvre au moyen d'un dispositif selon l'invention, le procédé respectant quatre lois de pilotage décrites plus loin. Trois de ces lois visent à prévenir une condensation liquide au sein du système ou à stopper une condensation liquide en vaporisant les gouttelettes déjà formées. La quatrième loi sert à éviter le givrage du système. Dans la suite et comme précédemment, les termes de « température extérieure » feront toujours référence à la température extérieure au véhicule, tandis que les termes « température de point de rosée » ou « point de rosée » feront toujours référence à la température de point de rosée de la masse d'air intérieur du système du véhicule.

Dans une première étape 10, le dispositif selon l'invention décrit précédemment est activé. Il peut l'être manuellement par un utilisateur du véhicule ou automatiquement, par exemple lors du démarrage du véhicule.

L'étape 20 est un test concernant uniquement la valeur de la température extérieure au véhicule, mesurée par exemple par le capteur 1. Si la valeur de cette température est supérieure ou égale à 3 degrés Celsius, le dispositif met en oeuvre les trois lois de pilotage ayant pour but d'empêcher la condensation liquide, c'est-à-dire la formation de buée. Dans le cas contraire, le dispositif met en oeuvre la loi de pilotage ayant pour but d'empêcher la condensation solide, c'est-à-dire le givrage.

Dans le premier cas, les trois lois à respecter sont les suivantes :

- Une loi de décondensation dite « préventive » :

Si, à un test d'une étape 40, les moyens 6 déterminent que la température extérieure est supérieure à la température de point de rosée Td, alors on passe à l'étape de test 30. Si, durant cette étape de test 30, les moyens 6 déterminent que la valeur de la température extérieure sera inférieure ou égale à la valeur de la température de point de rosée d'ici une durée de X minutes à partir de l'instant actuel t0, X valant par exemple 10 minutes, les moyens 6 commandent l'activation du moyen de chauffage à l'étape 50. Cette action étant préventive, les moyens 6 peuvent commander une puissance de chauffage faible de façon par exemple à maintenir la température actuelle à son niveau. Ainsi, on ne lutte pas contre la condensation une fois qu'elle est présente, mais on l'empêche d'arriver. De cette façon, la buée ne se forme jamais sur les glaces des systèmes du véhicule, de sorte que le véhicule est toujours bien visible, l'éclairage toujours suffisant, et on ne dépense pas une quantité d'énergie importante. L'invention tire donc profit des capacités d'anticipation des moyens 6 qui n'attendent pas qu'une situation de condensation se présente pour agir. Concernant la valeur de la température extérieure, son évolution future est estimée de la même manière que celle de la température de point de rosée, c'est-à-dire en fonction de ses valeurs précédentes et de sa tendance. Mais la température extérieure pourrait également être anticipée au moyen d'outils de prédiction météorologique.

- Une loi de décondensation dite « active » :

Lorsque la température de point de rosée du système est supérieure à la température extérieure au véhicule à l'instant actuel, comme déterminé durant l'étape de test 40, les moyens 6 commandent l'activation du moyen de chauffage 7 à une étape 60. De cette façon, on évite que la température de la paroi intérieure de la glace du système atteigne ou ne se maintienne à la température extérieure, ceci pouvant provoquer la formation de buée. Ainsi, on chauffe de manière à ce que la température intérieure soit supérieure à la température de point de rosée courante - également appelée « actuelle », c'est-à-dire telle qu'elle est au moment de son calcul à l'instant présent, ce qui est différent de la température de point de rosée estimée à un instant dans le futur - afin d'empêcher la formation de buée ou de faire disparaître rapidement la buée existante. Compte tenu de la loi préventive précitée, il arrive que le moyen de chauffage soit déjà activé lorsque cette situation se produit. On peut donc ici augmenter la puissance de chauffage, ou la maintenir.

- Une loi de décondensation dite « curative » :

Cette loi consiste à prendre le relais de la loi « active » précitée. Le moyen de chauffage 7 étant activés de par le respect de la loi active, lorsque la valeur de la température extérieure devient supérieure à la valeur de la température de point de rosée courante lors d'une étape 80, nous ne nous trouvons plus dans le cadre de la loi active. Cependant, il est nécessaire de maintenir actif le moyen de chauffage pendant une durée Y prédéterminée, c'est l'étape 90. La durée Y est par exemple de 10 minutes. En effet, lorsque la valeur de la température extérieure est au niveau de la température de point de rosée, il peut arriver qu'elle soit juste au-dessus puis juste en dessous quelques instants plus tard. Si les moyens de commande 6 désactivaient et réactivaient le moyen de chauffage 6 au gré des croisements de ces courbes de température ou en fonction des prévisions de ces croisements, l'énergie dépensée serait supérieure à celle dépensée pour un maintien du chauffage pendant une durée Y Ainsi, les lois « active » et « préventive » seules risqueraient de favoriser un cycle d'activation et de désactivation du chauffage à chaque fois que les courbes d'évolution des deux valeurs précitées se croisent. C'est pourquoi la loi curative est nécessaire.

Bien sûr, on peut prévoir que les valeurs des durées X et Y varient en fonction des choix des constructeurs, des choix de l'utilisateur du véhicule, ou en fonction des conditions environnementales.

Si, à l'étape 20, les moyens 6 ont déterminé à l'aide du capteur 1 que la valeur de la température extérieure était inférieure à 3 degrés Celsius, alors le dispositif met en oeuvre une quatrième loi, qui porte sur le dégivrage. En effet, à très basse température, le risque est que la vapeur d'eau se condense non pas en gouttelettes, mais directement en glace, formant du givre, notamment sur les glaces des projecteurs ou des feux du véhicule.

Cette quatrième loi, dite « loi de dégivrage » stipule que les moyens 6 doivent commander une puissance de chauffage inversement corrélée à la température extérieure. Par exemple, entre 3 degrés et -3 degrés Celsius, les moyens 6 commandent une puissance de chauffage équivalente à 40% de la puissance maximale, comme l'illustrent les étapes 301 et 302. Pour une température extérieure située entre -3 et -6 degrés Celsius, la puissance commandée serait de 60%, puis de 80% pour une température extérieure située entre -6 et -10 degrés Celsius, et enfin de 100% lorsque la température extérieure est inférieure à -10 degrés Celsius. Ces étapes 303 à 308 sont illustrées également à la figure 3. Bien sûr, les valeurs des puissances et des seuils peuvent être définis différemment. Cette loi de « dégivrage » permet de lutter contre le givrage des feux ou des projecteurs d'un véhicule tout en proportionnant la dépense d'énergie. Ainsi, le procédé et le dispositif selon l'invention qui le met en oeuvre permettent de réaliser des économies d'énergie aussi lors du dégivrage.

Le dispositif selon l'invention est donc apte à gérer une solution globale de pilotage de moyens de décondensation et de dégivrage, en prenant en compte les conditions d'apparition du point de rosée pour activer a minima la fonction de décondensation en fonction de l'environnement extérieur et en prenant en compte l'environnement extérieur pour déclencher a minima la fonction de dégivrage. Le dispositif, entièrement automatique, permet donc de maximiser la portée lumineuse des feux ou des projecteurs du véhicule en évitant la formation de buée ou de givre, tout en optimisant la consommation d'énergie.

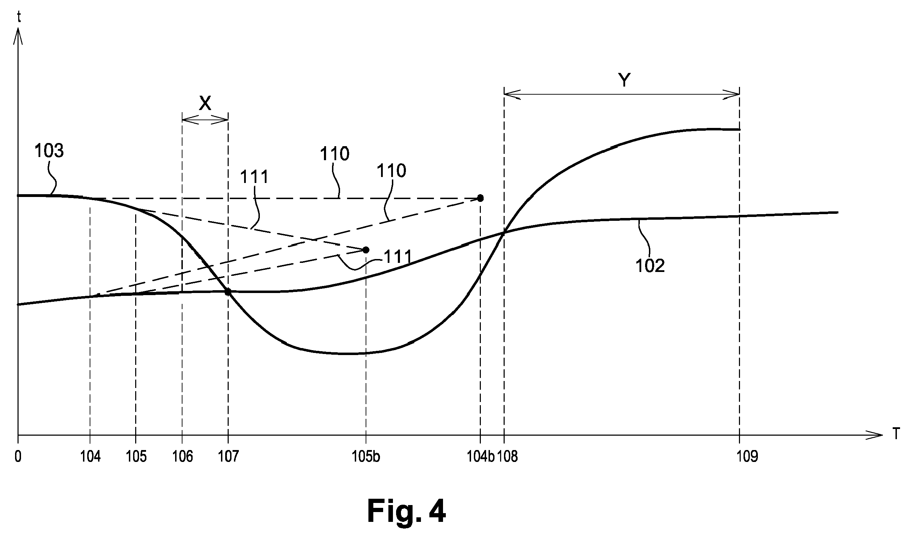

En référence à la figure 4, on va maintenant décrire l'évolution des températures précitées lors d'une mise en oeuvre du procédé précité régit par les quatre lois.

Le graphique représente l'évolution des températures en fonction du temps. La courbe 103 représente l'évolution de la température extérieure au cours du temps. La courbe 102 représente l'évolution de la température de point de rosée durant le même laps de temps. Le dispositif selon l'invention a été activé avant le zéro temporel illustré sur le graphique. A cet instant 0, la température extérieure est supérieure à la température de point de rosée. Le moyen de chauffage 7 n'est pas encore activé.

Les instants 104, 105 et 106 font référence à la loi dite curative. En effet, le dispositif, grâce aux moyens de commande 6 et aux capteurs de température et d'humidité 1, 3 et 5, calcule en temps réel l'évolution de la température de point de rosée du système et de la température extérieure. A l'instant 104, les moyens 6 déterminent, à partir des tangentes (111, 112) (représentées par des prolongements en pointillé 110) des courbes, que la température extérieure devrait basculer en dessous de la température de point de rosée à l'instant 104b, si les courbes maintiennent leur évolution telle qu'elle est à l'instant 104. L'instant 104b correspond donc à l'instant où les deux tangentes (111, 112) aux courbes (102, 103) se coupent. La durée entre le point 104 et le point 104b étant supérieure à X, les moyens 6 n'activent pas le moyen de chauffage 7. A l'instant 105, les moyens 6 déterminent que le croisement est prévu au point 105b entre les tangentes (113, 114). Là encore, la durée entre les points 105 et 105b est supérieure à X. Au point 106, les moyens déterminent que le croisement entre les deux tangentes (115, 116) aura lieu dans X minutes, à l'instant 107. C'est pourquoi les moyens 6 commandent l'activation du moyen de chauffage 7 à l'instant 106, en appliquant ainsi la loi « préventive ». Entre l'instant 107 et l'instant 108, la température extérieure est inférieure à la température de point de rosée. Le dispositif applique donc la loi « active » et maintient, voire augmente, la puissance de chauffage des moyens 7. A partir du point 108, la température extérieure redevient supérieure à la température de point de rosée. Le dispositif applique alors la loi « curative » : Il maintient le chauffage, avec puissance inférieure ou non, pendant une durée Y, qui se termine au point 109.

Le calcul des valeurs de température de point de rosée et les relevés des températures extérieures peut se faire à intervalles de temps réguliers prédéterminés, par exemple toutes les secondes, ou tous les dixièmes de seconde.

L'invention n'est pas limitée aux modes de réalisation présentés et d'autres modes de réalisation apparaîtront clairement à l'homme du métier.

Par exemple, il est possible de placer un capteur de température dans la paroi intérieure de la glace du système. De cette façon, on peut se passer de la valeur de la température extérieure, car seules la température de la paroi et la température de point de rosée de la masse d'air intérieur du système comptent pour déterminer quand et à quel niveau de puissance le moyen de chauffage doit être activé.

De même, il est possible de déterminer les valeurs de température intérieure et extérieure par des méthodes d'estimation, plutôt que par des mesures directes. Il est alors possible de se passer des capteurs de température.

**Revendications**

1. Dispositif de commande d'un système (2) d'éclairage et/ou de signalisation de véhicule (15), **caractérisé en ce qu'**il comprend des moyens (3, 5, 6) aptes à déterminer une valeur de température de point de rosée intérieure au système à partir d'au moins une valeur de température intérieure au système et d'au moins une valeur d'humidité intérieure au système.

2. Dispositif selon la revendication précédente, dans lequel les moyens (6) comprennent un capteur (3) de température intérieur au système.

3. Dispositif selon au moins l'une quelconque des revendications précédentes, dans lequel les moyens (6) comprennent un capteur (5) apte à mesurer une valeur d'humidité intérieure au système.

4. Dispositif selon au moins l'une quelconque des revendications précédentes, dans lequel les moyens (6) comprennent un capteur de température extérieur au système.

5. Dispositif selon au moins l'une quelconque des revendications précédentes, dans lequel les moyens (6) comprennent des moyens de commande aptes à commander au moins un moyen de chauffage (7) du système en fonction de la valeur de température de point de rosée et d'au moins une autre valeur de température.

6. Dispositif selon la revendication précédente, dans lequel l'autre valeur est une valeur de température extérieure au véhicule.

7. Dispositif selon la revendication précédente, dans lequel les moyens (6) sont aptes à maintenir actif le au moins un moyen de chauffage (7) du système pendant une durée prédéterminée (Y) une fois que (108) la valeur de la température extérieure est devenue supérieure à la valeur de température de point de rosée.

8. Dispositif selon au moins l'une quelconque des revendications précédentes, dans lequel les moyens (6) sont aptes à déterminer, à un instant donné (104, 105, 106), une valeur de la dérivée d'une fonction représentant l'évolution de la valeur de température de point de rosée audit instant donné.

9. Dispositif selon au moins l'une quelconque des revendications précédentes, dans lequel les moyens (6) sont aptes à déterminer une valeur représentant un instant (107) auquel la valeur de température de point de rosée sera égale à la valeur de température extérieure et à commander le au moins un moyen de chauffage avec une avance (106) d'une durée prédéterminée (X) par rapport à cet instant.

10. Dispositif selon au moins l'une quelconque des revendications 1 à 6, dans lequel la valeur de température de point de rosée représente la température de point de rosée courante.

11. Dispositif selon la revendication précédente, dans lequel les moyens (6) sont aptes à commander le au moins un moyen de chauffage (7) lorsque (107) la valeur de température de point de rosée est supérieure à la valeur de température extérieure.

**12.** Dispositif selon au moins l'une quelconque des revendications précédentes, dans lequel les moyens (6) sont en outre aptes à commander le au moins un moyen de chauffage (7) du système de manière à empêcher un givrage au sein du système.

**13.** Dispositif selon la revendication précédente, dans lequel les moyens (6) sont aptes à déterminer une valeur de puissance du au moins un moyen de chauffage (7) parmi au moins deux valeurs non nulles en fonction d'une valeur de température extérieure au véhicule.

**14.** Système d'éclairage et/ou de signalisation (2), **caractérisé en ce qu'**il comprend au moins un dispositif selon au moins l'une quelconque des revendications précédentes.

**15.** Procédé de commande d'un système d'éclairage et/ou de signalisation de véhicule, **caractérisé en ce qu'**on détermine une valeur de température de point de rosée à l'intérieur du système à partir d'au moins une valeur de température intérieure au système et d'au moins une valeur d'humidité intérieure au système.

# Fig. 1

# Fig. 2

**Fig. 3**

EP 3 081 850 A1

**Fig. 4**

EP 3 081 850 A1

EP 3 081 850 A1

**RAPPORT DE RECHERCHE EUROPEENNE**

Europäisches Patentamt
European Patent Office
Office européen des brevets

Numéro de la demande

EP 16 16 5501

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 009 371 A1 (VALEO VISION [FR]) 6 février 2015 (2015-02-06) * le document en entier * ----- | 1-6, 10-15 | INV. F21S8/10 F21V29/90 |
| X | US 8 563 898 B1 (WRIGHT TIMOTHY GLEN [US] ET AL) 22 octobre 2013 (2013-10-22) * colonne 3, ligne 22 - colonne 5, ligne 41; revendications 1-5, 16, 17; figure 1 * ----- | 1-7, 10-13,15 | |
| A | DE 10 2005 019651 A1 (SCHEFENACKER VISION SYSTEMS [DE]) 9 novembre 2006 (2006-11-09) * alinéas [0022] - [0029]; figure 1 * ----- | 1-7,14, 15 | |
| A,D | DE 10 2012 010871 A1 (DAIMLER AG [DE]) 17 janvier 2013 (2013-01-17) * le document en entier * ----- | 1,2,5, 14,15 | |

**DOMAINES TECHNIQUES RECHERCHES (IPC)**

F21S
F21V

Le présent rapport a été établi pour toutes les revendications

| Lieu de la recherche | Date d'achèvement de la recherche | Examinateur |
|---|---|---|
| Munich | 12 août 2016 | von der Hardt, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 16 5501

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-08-2016

| Document brevet cité au rapport de recherche | | Date de publication | Membre(s) de la famille de brevet(s) | Date de publication |
|---|---|---|---|---|
| FR 3009371 | A1 | 06-02-2015 | AUCUN | |
| US 8563898 | B1 | 22-10-2013 | AUCUN | |
| DE 102005019651 | A1 | 09-11-2006 | AUCUN | |
| DE 102012010871 | A1 | 17-01-2013 | AUCUN | |

EPO FORM P0460

Pour tout renseignement concernant cette annexe : voir Journal Officiel de l'Office européen des brevets, No.12/82

**EP 3 081 850 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102012010871